# EUROPÄISCHE PATENTANMELDUNG

(11) **EP 4 509 441 A1**
(43) Veröffentlichungstag der Anmeldung: **19.02.2025**
(21) Anmeldenummer: 23191709.7
(22) Anmeldetag: 16.08.2023
(51) Int. Cl.: B65G 47/51

(54) **ZWISCHENSPEICHER FÜR PRODUKTETRÄGER**

(71) Anmelder: Rotzinger AG, 4303 Kaiseraugst (CH)
(72) Erfinder: Philipp, Kurt, 79639 Grenzach-Wyhlen (DE)
(74) Vertreter: Braunpat AG

(57) **Zusammenfassung**

Zwischenspeicher (1) zum Zwischenspeichern von Stückgütern auf Produkteträgern (20,30,40) in einer Produktionslinie (2), umfassend einen Einlaufbereich (3), einen Auslaufbereich (4), zwei übereinanderliegende Staubereiche (5a, 5b), wobei die Staubereiche (5a, 5b) horizontale Seitenführungen (6) umfassen, die sich jeweils vom Einlaufbereich bis zum Auslaufbereich erstrecken, wobei die Seitenführungen derart konfiguriert sind, dass die Produkteträger (20,30,40) vom Einlaufbereich zum Auslaufbereich und umgekehrt überführbar sind, während sie im Wesentlichen horizontal bleiben, einen einlaufseitigen Vertikalförderer (7a) und einen auslaufseitigen Vertikalförderer (7b) zum Überführen der Produkteträger vom ersten Staubereich (5a) in Richtung des zweiten Staubereichs (5b) und vom zweiten Staubereich (5a) in Richtung des ersten Staubereichs (5b), während die Produkteträger im Wesentlichen horizontal bleiben, wobei für jeden Staubereich (5a, 5b) mindestens eine Fördereinrichtung (10) für das Ankoppeln und Abkoppeln der Produkteträger an die Vertikalförderer (7a, 7b) und für das Überführen der Produkteträger über die Seitenführungen vom Einlaufbereich zum Auslaufbereich oder umgekehrt, und wobei der Zwischenspeicher derart konfiguriert ist, dass die Produkteträger vom Einlaufbereich zum Auslaufbereich und umgekehrt mittels der Fördereinrichtungen stapelweise überführbar sind.

## Beschreibung

### Technisches Gebiet der Erfindung

Die vorliegende Erfindung bezieht sich auf das technische Gebiet der Zwischenspeicher für Produktionslinien, insbesondere Verpackungslinien. Sie betrifft einen Zwischenspeicher, welcher das Zwischenspeichern von Stückgütern auf Produkteträger ermöglicht.

### Stand der Technik

In der Lebensmittelindustrie werden Zwischenspeicher eingesetzt, um den Produktionsprozess vom Verpackungsprozess zu entkoppeln. Der Produktionsprozess läuft zumeist mit einer konstanten gleichmässigen Geschwindigkeit, um Qualität und Konsistenz der Produkte zu gewährleisten. Der Verpackungsprozess läuft zumeist diskontinuierlich mit Stopps und Störungen, weil oft viele Maschinen in einer Verpackungslinie hintereinandergeschaltet sind und bei einem Stopp einer Maschine dann folglich die ganze Linie gestoppt werden muss. Dadurch entsteht dann ein Überlauf an Produkten, da die Produktion nicht ohne weiteres gestoppt werden kann.

Um diesen Produktverlust zu vermeiden, kommen Zwischenspeicher zum Einsatz, die einlaufseitig mit der Produktion synchronisiert sind und auslaufseitig ebenso mit der Verpackung. Wenn die Verpackungsgeschwindigkeit wegen Stopps sinkt, dann kann der Zwischenspeicher die überzähligen Produkte aufnehmen und speichern, sodass diese nicht verloren sind. Wenn der Füllgrad des Zwischenspeichers über einen definierbaren Punkt steigt, dann kann der Auslauf des Speichers mit einer höheren Geschwindigkeit betrieben werden, um so den Speicher während der Produktion wieder zu leeren. Hierfür werden die dem Speicher nachgeschalteten Verpackungslinien durch eine steuerungstechnische Sollwertvorgabe mit einer höheren Geschwindigkeit angesteuert. Somit kann einer drohenden Überfüllung des Speichers frühzeitig entgegengewirkt werden.

Bei der Handhabung von unverpackten Lebensmitteln funktionieren diese Zwischenspeicher zumeist nach dem First-in-First-out-Prinzip (FiFo). Dadurch kann der Zwischenspeicher in die Produktionskette eingeschlauft werden und die Reihenfolge der Produkte wird nicht durchmischt. Die industrielle Herstellung und Verarbeitung von Stückgütern, insbesondere von Lebensmitteln wie Schokolade, Bonbons, Kekse und Pizza, ist ein komplexer Prozess, der sich über die Jahre hinweg stetig weiterentwickelt hat. Die Anforderungen an die Produktionslinien sind enorm, da sie sowohl in Bezug auf Effizienz als auch Qualität erfüllt werden müssen.

Zwischenspeicher, die sich am FiFo-Prinzip (First in, First out) orientieren, manifestieren sich häufig als Bandspeicher oder Gondelspeicher. Bei beiden Varianten stellt die Lagerung von Stückgütern eine Herausforderung dar, da sie oftmals voluminöse Abmessungen mit sich bringt. Diese grossen Dimensionen können sowohl die Fertigung als auch den Transport der Speichereinheiten erheblich komplizieren. Des Weiteren ist der verfügbare Raum für diese Speicher oft limitiert, was unweigerlich die Speicherkapazität einschränkt. Ein spezielles Problem bei Gondelspeichern, wie beispielsweise bei dem Speicher aus der internationalen Patentanmeldung WO2022043464A1 bekannt, ist, dass Produkte aufgrund des Pendelns der Gondeln von den Ablageflächen rutschen können.

Eine Aufgabe der vorliegenden Erfindung ist es daher, diese Einschränkungen zu beheben und einen Zwischenspeicher vorzuschlagen, der bei gleicher Speicherkapazität geringere Abmessungen als die aus dem Stand der Technik bekannten Zwischenspeicher aufweist und der einen sicheren Transport der Produkte ermöglicht, wobei insbesondere die Produkte im Wesentlichen horizontal transportiert werden.

### Zusammenfassung der Erfindung

Gemäss der vorliegenden Erfindung werden diese Ziele vor allem durch die Elemente des unabhängigen Anspruchs erreicht. Weitere vorteilhafte Ausführungsformen gehen ausserdem aus den abhängigen Ansprüchen und der Beschreibung hervor.

Insbesondere werden die Ziele der vorliegenden Erfindung erreicht durch einen Zwischenspeicher zum Zwischenspeichern von Stückgütern, wie z. B. Schokolade, Bonbons, Keksen oder Pizza, auf Produkteträgern in einer Produktionslinie, umfassend einen an zumindest einem Zufuhrband anschliessbaren Einlaufbereich, einen an zumindest einem Austrageband anschliessbaren Auslaufbereich, zwei übereinanderliegende Staubereiche, wobei die Staubereiche horizontale Seitenführungen umfassen, die sich jeweils vom Einlaufbereich bis zum Auslaufbereich erstrecken, wobei die Seitenführungen derart konfiguriert sind, dass die Produkteträger vom Einlaufbereich zum Auslaufbereich und umgekehrt überführbar sind, während sie im Wesentlichen horizontal bleiben, einen einlaufseitigen Vertikalförderer und einen auslaufseitigen Vertikalförderer zum Überführen der Produkteträger vom ersten Staubereich in Richtung des zweiten Staubereichs und vom zweiten Staubereich in Richtung des ersten Staubereichs, während die Produkteträger im Wesentlichen horizontal bleiben, wobei für jeden Staubereich mindestens eine Fördereinrichtung für das Ankoppeln und Abkoppeln der Produkteträger an die Vertikalförderer und für das Überführen der Produkteträger über die Seitenführungen vom Einlaufbereich zum Auslaufbereich oder umgekehrt vorgesehen ist, wobei der Zwischenspeicher derart konfiguriert ist, dass die Produkteträger vom Einlaufbereich zum Auslaufbereich und umgekehrt mittels der Fördereinrichtungen stapelweise überführbar sind.

Mit der vorliegenden Erfindung ist es daher möglich, Stückgüter auf Produkteträger zwischenzuspeichern und gleichzeitig zu gewährleisten, dass die Stückgüter nur horizontal transportiert werden, insbesondere ohne Pendelbewegung wie bei einem Gondelspeicher. Schliesslich ist es dank des Zwischenspeichers der vorliegenden Erfindung möglich, einen Zwischenspeicher bereitzustellen, dessen Höhe auf einer Grösse gehalten werden kann, die den Transport in Containern ermöglicht, ohne dass er demontiert werden muss, während die Speicherkapazität mit den aus dem Stand der Technik bekannten Zwischenspeichern vergleichbar ist.

Im Vergleich zu einem einschlägig bekannten Gondelspeicher ist der vorliegende Zwischenspeicher bei vergleichbarer Speicherkapazität und ähnlicher Baulänge nur halb so hoch. Somit benötigt dieser neue Speicher nur die Hälfte des Einbauraums. Die Höhe dieses Speichers hängt von der Stapelhöhe ab, d. h. von der Anzahl der Produkteträger pro Stapel und deren vertikalem Abstand zueinander. Wenn nun die Stapelhöhe entsprechend so gewählt wird, dass sich eine stark reduzierte Bauhöhe von kleiner gleich 2,5 m ergibt, so kann dieser Speicher zumeist in einem zusammengebauten Zustand verpackt und zu den Kunden transportiert werden. Dadurch ist die Montagezeit beim Kunden drastisch reduziert und der Kunde kann durch einen kleineren Unterbruch in der Produktion entsprechend schneller wieder produzieren. Ausserdem sind auch die Montage- und Inbetriebnahmekosten entsprechend reduziert und ein solcher Speicher kann dann auch günstiger angeboten werden.

Da das Produkt im Staubereich des Speichers stationär auf den Produkteträgern liegt und vom Einlauf zum Auslauf durch die Fördereinrichtungen nur mit einer kleinen Geschwindigkeit über die Seitenführungen durchgeschoben wird, wird das Produkt kaum belastet. Im Gegensatz kann beispielweise bei den Gondelspeichern durch das Pendeln der Gondeln das Produkt von den Gondeltablaren herunterrutschen. Da im vorliegenden Fall die Produkteträger auch als grossflächige Platten oder Gegenformen ausgebildet sein können, ist es möglich, auch Produktformationen am Einlauf des Speichers auf diese Platten abzulegen. Pralinen, Napolitain-Täfelchen oder Kekse werden oft als Produktformationen produziert und zugeführt. Hierfür können am Einlauf dann entleerte Platten schlaufenförmig aus dem Speicher ausgefahren werden, um dann mittels Förderbänder mit Produktformationen beladen zu werden, und am Auslauf können dann die beladenen Produkteträger ebenfalls schlaufenförmig ausgefahren werden, um dann beispielsweise von Pick-and-Place-Robotern entladen zu werden. In einer speziellen Ausführungsform können die Produkteträger auch als flächige Auffangwannen ausgebildet sein, die dann in der eben beschriebenen Art und Weise im Speichereinlauf mit Schüttgut beladen werden können und im Auslauf mittels Roboter wieder entladen werden können.

In einer ersten bevorzugten Ausführungsform der vorliegenden Erfindung weisen die Vertikalförderer jeweils zwei paarweise angeordnete und getrennt antreibbare Förderketten auf.

Dadurch wird eine maximale Effizienz erreicht. Eine erste Gruppe, oder Stapel, von leeren Produkteträgern kann von einem Staubereich zum anderen Staubereich durch den einlaufseitigen Vertikalförderer überführt werden, während die Stückgüter auf diese Produkteträger platziert werden. Das Überführen dieser Produkteträger muss so langsam wie nötig erfolgen, um einen Transfer der Produkte zu ermöglichen, ohne dass diese beschädigt werden. In der Zwischenzeit kann eine zweite Gruppe von leeren Produkteträgern von der zweiten Förderkette übernommen werden und sich der ersten Gruppe anschliessen. Die leeren Produkteträger können mit hoher Geschwindigkeit weitertransportiert werden. Dies stellt sicher, dass immer freie Produkteträger zur Verfügung stehen, auf die Stückgüter umgeladen werden können. Dasselbe gilt für den Auslaufbereich, wo paarweise angeordnete und getrennt antreibbare Förderketten sicherstellen, dass es immer einen vollen Produkteträger für den Transfer der Stückgüter auf ein Austragsband gibt.

Die zwei beidseitig paarweise angeordneten Förderketten der Vertikalförderer weisen zum Beispiel Mitnehmertaschen auf, um die Produkteträger links und rechts definiert aufzunehmen. Diese Mitnehmertaschen sind in einem bestimmten vertikalen Abstand zueinander an der Kette befestigt. Dieser Abstand hängt direkt von der Höhe des Produkts und von der Höhe des Produkteträgers ab. Im Einlauf des Speichers wird nun eine bestimmte Anzahl von Produkteträgern mit Produktreihen beladen. Beispielsweise werden 20 Produkteträger mit Produktreihen beladen. Diese 20 Produkteträger werden nun links und rechts in den Mitnehmertaschen der beiden korrespondierenden Ketten aufgenommen und bilden einen vertikalen Stapel, der von einem Staubereich zum anderen Staubereich überführt wird.

In einer weiteren bevorzugten Ausführungsform der vorliegenden Erfindung sind für jeden Staubereich mindestens zwei Fördereinrichtungen vorgesehen. Es ermöglicht, die Abläufe am Einlaufbereich und am Auslaufbereich eines Staubereichs zu entkoppeln. Dann kann zum Beispiel eine erste Fördereinrichtung einen Stapel von Produkteträgern vom einlaufseitigen Vertikalförderer abkoppeln, während eine zweite Fördereinrichtung einen anderen Stapel an den auslaufseitigen Vertikalförderer ankoppelt. Ausserdem ist es bei einem Zwischenspeicher mit grosser Länge vorteilhaft, mehr als zwei Fördereinrichtungen vorzusehen, damit die Stapel von Produkteträgern trotz des erforderlichen Zwischenlagergestells über die Seitenführungen vom Einlaufbereich zum Auslaufbereich überführt werden können.

In einer anderen bevorzugten Ausführungsform der vorliegenden Erfindung weist der Zwischenspeicher im Auslaufbereich eine Auslauffördereinrichtung für das stapelweise Überführen von Produkteträgern auf eine an dem Auslaufbereich angekoppelte Transporteinrichtung auf. Dies ermöglicht eine einfache und automatische Herausnahme von Produkteträgern aus dem Zwischenspeicher, um sie zu reinigen. Die Transporteinrichtung ermöglicht dann einen einfachen Transport der Produkteträger zu einer Waschanlage. Wichtig zu beachten ist, dass die Auslauffördereinrichtung auch für die einfache automatische Wiedereinführung von Stapel von Produkteträgern in den Zwischenspeicher, zum Beispiel nachdem diese gewaschen wurden, vorgesehen ist.

In einer weiteren bevorzugten Ausführungsform der vorliegenden Erfindung ist der Zwischenspeicher derart konfiguriert, dass die Produkteträger von einem Staubereich zum anderen Staubereich mittels Vertikalförderer stapelweise überführbar sind. Insbesondere ist der Zwischenspeicher derart konfiguriert, dass leere Produkteträger stapelweise vom unteren Staubereich zum oberen Staubereich durch den einlaufseitigen Vertikalförderer überführbar sind, während Stückgüter vom Zufuhrband auf die Produkteträger überführt werden. In diesem Fall ist vorteilhafterweise der Zwischenspeicher derart konfiguriert, dass volle Produkteträger stapelweise vom oberen Staubereich zum unteren Staubereich durch den auslaufseitigen Vertikalförderer überführbar sind, während Stückgüter von dem Produkteträger auf mindestens ein Austrageband überführt werden.

Der Zwischenspeicher kann jedoch auch derart konfiguriert sein, dass volle Produkteträger stapelweise vom unteren Staubereich zum oberen Staubereich durch den auslaufseitigen Vertikalförderer überführbar sind, während Stückgüter von dem Produkteträger auf mindestens ein Austrageband überführt werden. In diesem Fall ist der Zwischenspeicher vorteilhafterweise derart konfiguriert, dass leere Produkteträger stapelweise vom oberen Staubereich zum unteren Staubereich durch den einlaufseitigen Vertikalförderer überführbar sind, während Stückgüter von dem Zufuhrband auf die Produkteträger überführt werden.

In einer weiteren bevorzugten Ausführungsform der vorliegenden Erfindung umfasst der Zwischenspeicher einlaufseitig eine erste Förderschlaufe zum Herausführen von leeren Produkteträgern aus einem Staubereich (und zum Zurückführen von vollen Produkteträgern in den anderen Staubereich). Vorteilhafterweise umfasst der Zwischenspeicher dann auslaufseitig eine zweite Förderschlaufe zum Herausführen von vollen Produkteträgern aus einem Staubereich und zum Zurückführen von leeren Produkteträgern in den anderen Staubereich.

Das ermöglicht, dass die Produkteträger auch als grossflächige Platten oder Gegenformen ausgebildet sein können, wird es möglich, auch Produktformationen am Einlauf des Speichers auf diese Platten abzulegen. Pralinen, Napolitain-Täfelchen oder Kekse werden oft als Produktformationen produziert und zugeführt. Hierfür können am Einlauf dann entleerte Platten schlaufenförmig aus dem Speicher ausgefahren werden, um dann mittels Förderbändern mit Produktformationen beladen zu werden. In einer speziellen Ausführungsform können die Produkteträger auch als flächige Auffangwannen ausgebildet sein, die dann in der eben beschriebenen Art und Weise im Speichereinlauf mit Schüttgut beladen werden können und im Auslauf mittels Robotern wieder entladen werden können.

In einer weiteren bevorzugten Ausführungsform der vorliegenden Erfindung umfasst der Zwischenspeicher auslaufseitig Mittel zur Überführung der Stückgüter von den vollen Produkteträgern auf der zweiten Förderschlaufe auf mindestens ein Austrageband. Diese Mittel können zum Beispiel Pick-and-Place-Roboter sein.

In einer weiteren bevorzugten Ausführungsform der vorliegenden Erfindung ist mindestens einer der Staubereiche von einem zumindest teilweise geschlossenen Gehäuse in Form eines Tunnels gebildet. Dadurch kann der Speicher auch als Kühler vorgesehen werden. Diese Kühlfunktion kann realisiert werden, indem dieser kanalförmige oder tunnelförmige Staubereich mit einer thermisch isolierenden Verschalung eingehaust wird und beispielsweise mit kalter Luft durchströmt wird. Die erforderliche Kühlzeit ist produktspezifisch einstellbar, da diese einfach durch die Mindestdurchlaufzeit der Produkte im Staubereich definierbar ist. Somit verweilen die Produkte im Staubereich eine definierte Zeit zum Kühlen oder Tempern, bevor sie im Speicherauslauf zur nachgelagerten Weiterverarbeitung gefördert werden. Vorteilhafterweise umfasst das Gehäuse selbst Kühlmittel für das Kühlen der Stückgüter und/oder der Produkteträger.

### Kurzbeschreibung der Zeichnungen

- Figuren 1a bis 1c zeigen Beispiele von Produkteträgern;
- Figur 2 zeigt eine perspektivische Ansicht einer Produktionsline umfassend einen Zwischenspeicher gemäss einer ersten Ausführungsform der vorliegenden Erfindung;
- Figur 3 zeigt eine Seitenansicht eines Zwischenspeichers gemäss der ersten Ausführungsform der vorliegenden Erfindung;
- Figur 4 zeigt eine perspektivische Ansicht eines Zwischenspeichers gemäss der ersten Ausführungsform der vorliegenden Erfindung;
- Figur 5 zeigt eine Draufsicht eines Zwischenspeichers gemäss der ersten Ausführungsform der vorliegenden Erfindung;

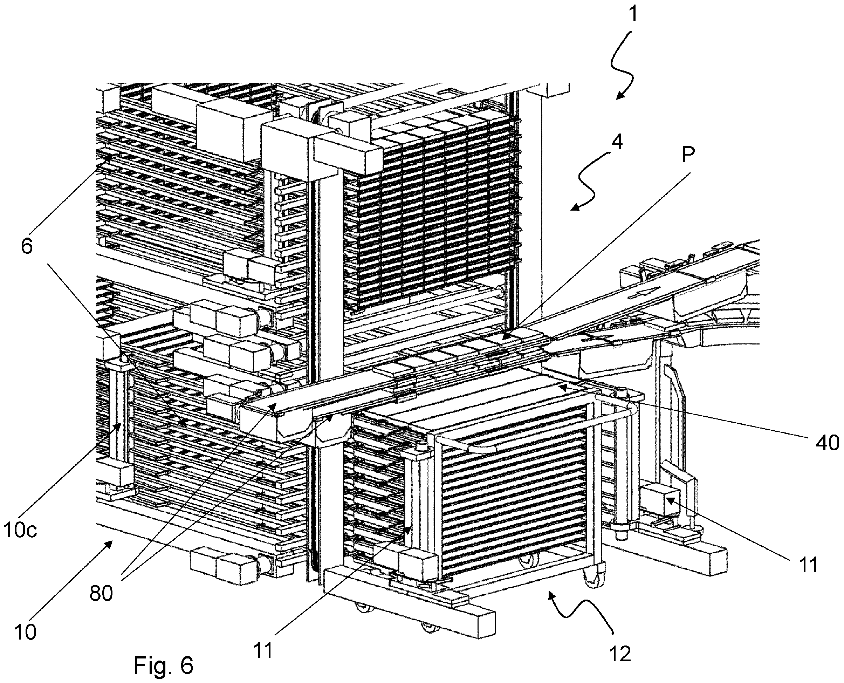

- Figur 6 zeigt eine perspektivische Ansicht des Auslaufs eines Zwischenspeichers gemäss der ersten Ausführungsform der vorliegenden Erfindung;
- Figur 7 zeigt eine perspektivische Ansicht einer Produktionsline umfassend einen Zwischenspeicher gemäss einer zweiten Ausführungsform der vorliegenden Erfindung;
- Figur 8 zeigt eine perspektivische Ansicht eines Zwischenspeichers gemäss der zweiten Ausführungsform der vorliegenden Erfindung; und
- Figur 9 zeigt eine Draufsicht eines Zwischenspeichers gemäss der zweiten Ausführungsform der vorliegenden Erfindung.

### Bevorzugte Ausführungsformen der Erfindung

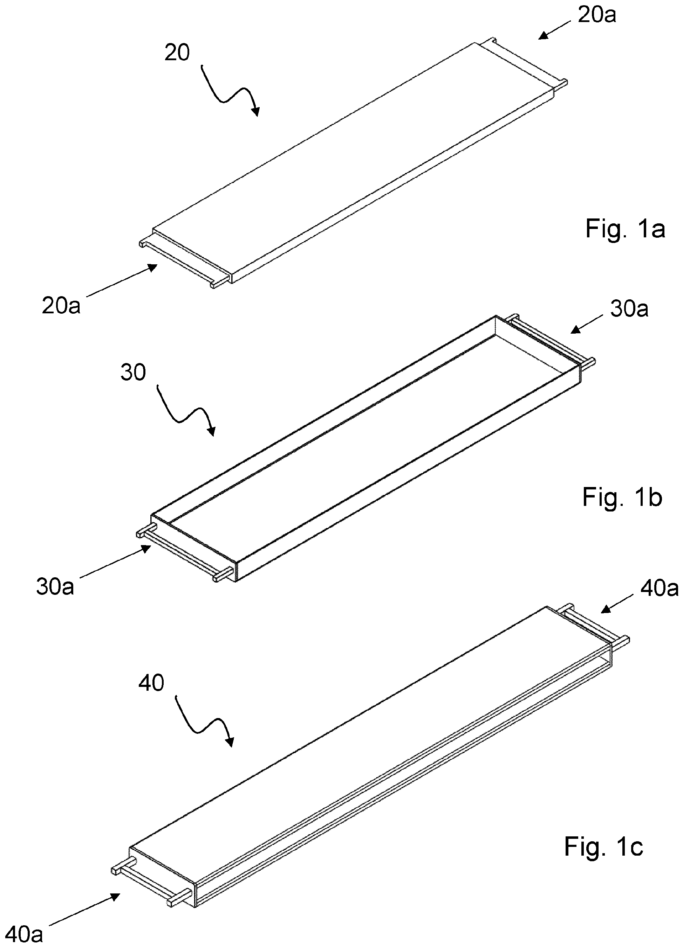

Figuren 1a-1c zeigen drei bevorzugte Ausführungsformen von Produkteträgern, die zum Speichern von Stückgütern mit einem Zwischenspeicher nach der vorliegenden Erfindung geeignet sind. In Fig. 1a ist ein Produkteträger 20 in Form einer einfachen Platte gezeigt, auf welcher die zu transportierenden Stückgüter gelegt werden können. Auf der Seite der Platte verfügt der Produkteträger über Seitenauflagen 20a, die an die Seitenführungen des Speichers für das Überführen zwischen Einlauf und Auslauf anliegen. Ausserdem werden die Seitenauflagen 20a von den Mitnehmertaschen der Vertikalförderer aufgenommen, um die Träger von einem Staubereich zum anderen zu überführen (vgl. unten für die Details).

Fig. 1b zeigt einen Produkteträger 30 in Form einer Wanne, in welche Schüttgüter geleert und transportiert werden können. Auch der Produkteträger 30 verfügt über Seitenauflagen 30a für das seitliche Überführen der Träger über die Seitenführungen und für das Vertikalfördern mittels Vertikalförderer.

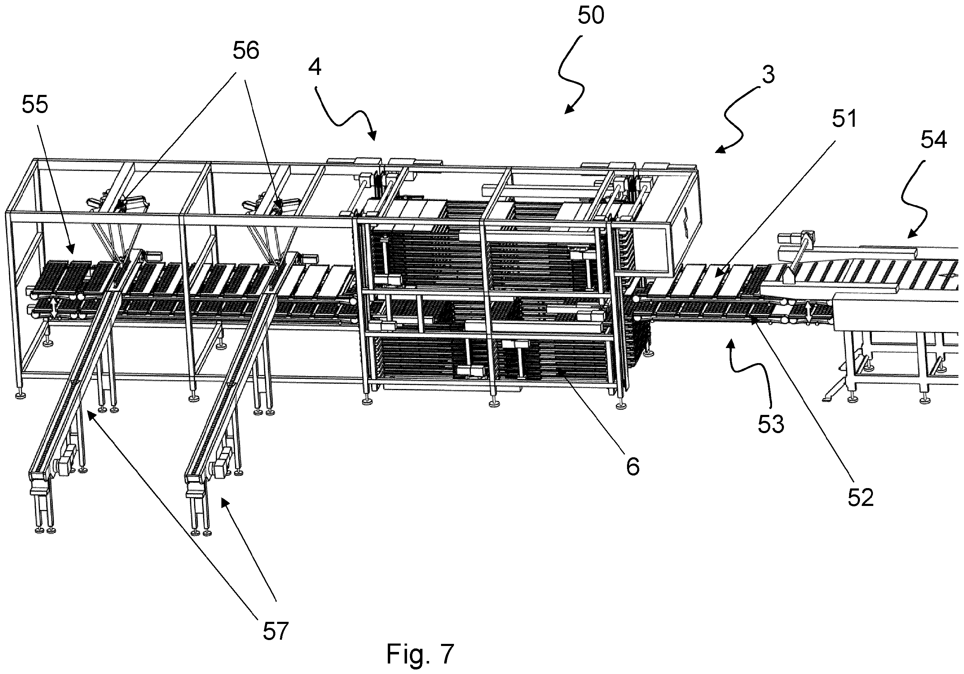

Schliesslich zeigt Fig. 1c eine dritte Ausführungsform eines Produkteträgers 40, der über zwei Ebenen 40b und 40c verfügt, auf denen die Stückgüter gelegt werden können. Auch der Produkteträger 40 verfügt über Seitenauflagen 40a für das seitliche Überführen der Träger über die Seitenführungen und für das Vertikalfördern mittels Vertikalförderer. Es ist wichtig zu beachten, dass die vorliegende Erfindung nicht auf einen Zwischenspeicher beschränkt ist, der die Produkteträger der Fig. 1a-c verwendet. Diese Figuren sind nur mögliche Beispiele für Produkteträger. So kann der vorliegende Zwischenspeicher auch Träger in Form von längeren Platten verwenden, die Vertiefungen zur Aufnahme von Produkten, z. B. Schokolade, haben, wie in den Figuren 7 bis 9 zu sehen ist.

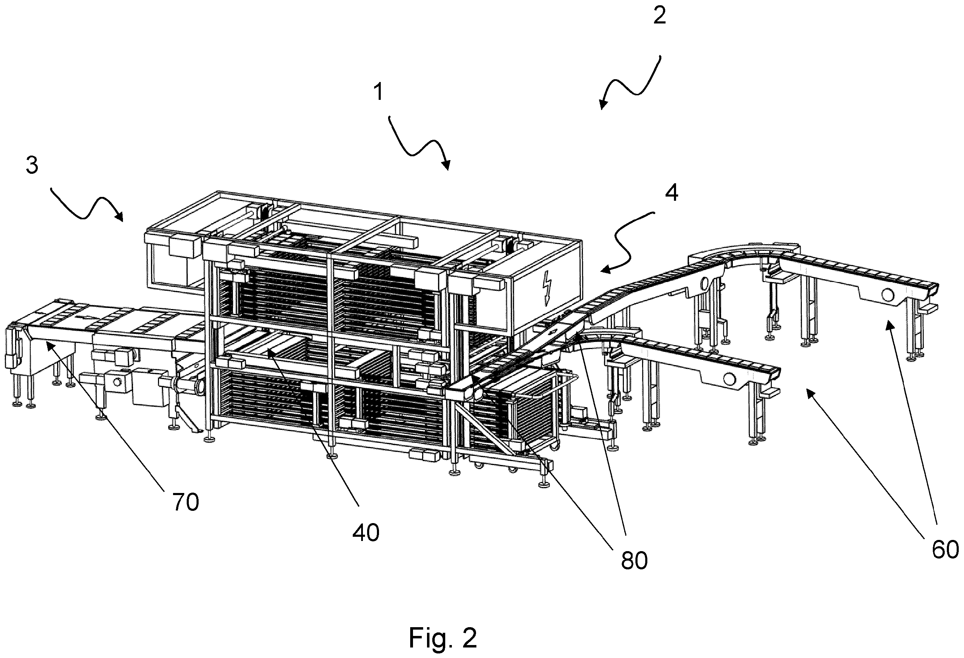

Figur 2 zeigt eine Produktionslinie 2 umfassend einen Zwischenspeicher 1 gemäss einer ersten Ausführung der vorliegenden Erfindung. Der Speicher 1 verfügt über einen Einlaufbereich 3, an dem ein Zufuhrband 70 angeschlossen ist. Auf der Auslaufseite sind zwei Austragsbänder 80 an dem Auslaufbereich 4 des Speichers angeschlossen, die die Stückgüter P von den Produkteträgern 40 des Speichers zur Weiterverarbeitung durch die Verpackungslinien 60 aufnehmen.

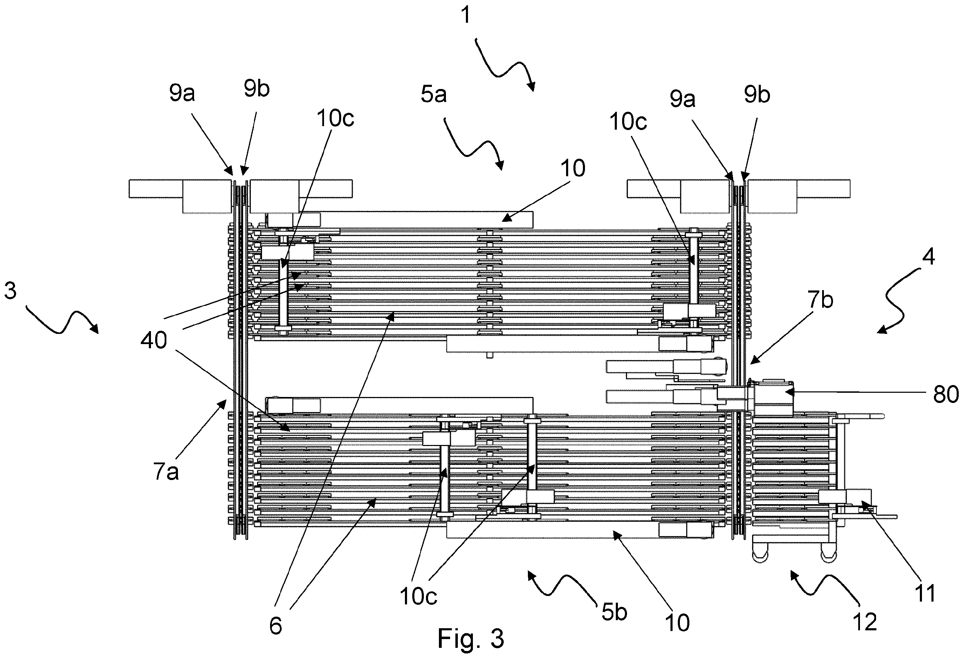

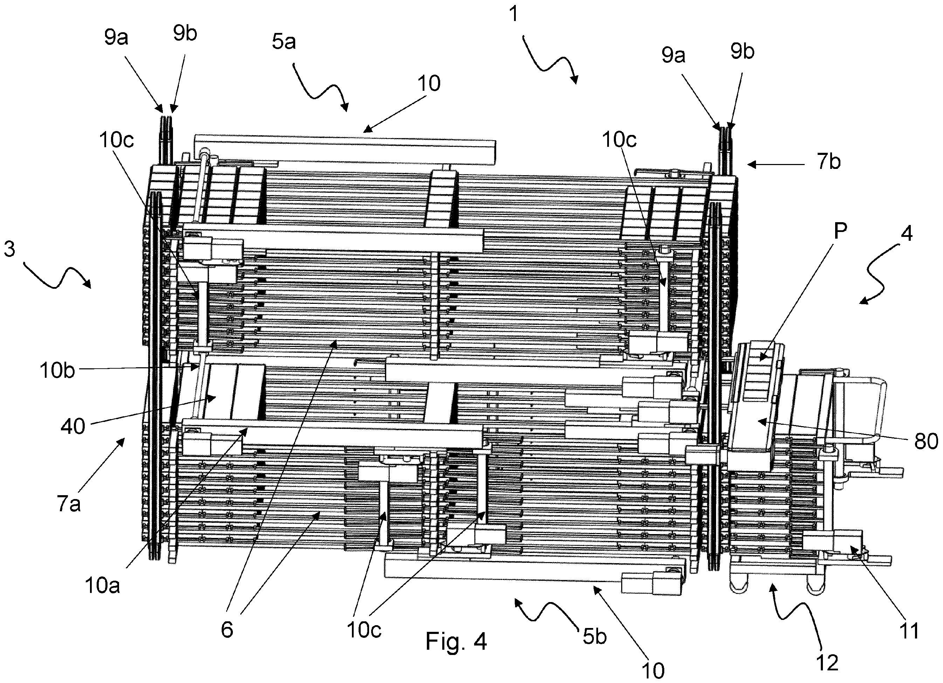

Das Funktionsprinzip des Zwischenspeichers 1 wird anhand der Figuren 3 und 4 im Detail erläutert. In diesen Figuren wurden das Gestell sowie andere Elemente ausgeblendet. Die aus der Produktion herkommenden Produkte oder Stückgüter P werden durch das Zufuhrband dem Einlauf des Speichers zugeführt. Oft werden die unverpackten Produkte reihenförmig oder in Formationen taktweise von einem Hauptband der Produktion übernommen und dann mittels kurzer Förderbänder von einer intermittierenden Geschwindigkeit in eine kontinuierliche gleichmässige Geschwindigkeit überführt. Mit dieser Geschwindigkeit werden dann die im Einlauf des Zwischenspeichers bereitgestellten leeren Produkteträger 40 mit Produkten beschickt. Hierbei muss die Fördergeschwindigkeit der Produkte so eingestellt sein, dass die kinetische Energie der Produkte ausreicht, um vollständig auf die Produkteträger zu rutschen. Typische Produkte sind hierbei Schokoladetafeln, Schokoriegel, Kekse, Gebäck oder auch Stückgut aus Käse oder Pizza etc. Die Form der Produkteträger ist zumeist flächig und so breit, dass diese Breite mit der Breite des Hauptbands der Produktion korrespondiert. Die Produkteträger sind nur so hoch, dass diese eigenstabil sind und durch das Produktgewicht nicht durchhängen. Das Material der Produkteträger ist aus lebensmittelkonformem Kunststoff oder Edelstahl. Am Einlauf des Zwischenspeichers werden die leeren Produkteträger 40 von unten in vertikaler Richtung mittels einlaufseitigen Vertikalförderers 7a nach oben zur Einlaufebene positioniert. Die Produkteträger 40 liegen beidseitig auf einer Auflage auf und sind in Förderrichtung und entgegen der Förderrichtung geführt. Die Produktaufnahmefläche der Produkteträger ist horizontal auf die Förderebene ausgerichtet, damit die Produkte auf der ganzen Breite gleichmässig aufgenommen werden können. Die Vertikalbewegung der Produkteträger wird mittels zwei beidseitig paarweise angeordneter Förderketten 9a, 9b des einlaufseitigen Vertikalförderers realisiert, die jeweils mit Mitnehmertaschen bestückt sind, um die Produkteträger über die Seitenauflagen 40a definiert aufzunehmen. Diese Mitnehmertaschen sind in einem bestimmten vertikalen Abstand zueinander an der Kette befestigt. Dieser Abstand hängt direkt von der Höhe des Produkts P und von der Höhe des Produkteträgers 40 ab. Im Einlauf des Speichers wird nun eine bestimmte Anzahl von Produkteträgern mit Produktreihen beladen. Beispielsweise werden 20 Produkteträger mit Produktreihen beladen. Die Seitenauflagen 40a der Produkteträger werden nun auf beiden Seiten in den Mitnehmertaschen der beiden korrespondierenden Ketten aufgenommen und bilden einen vertikalen Stapel. Dieser Stapel wird anschliessend zum oberen Staubereich 5a des Zwischenspeichers positioniert und durch eine beidseitig angeordnete horizontale Fördereinrichtung 10 in den Staubereich eingeschoben.

Die Produkteträger 40 liegen dann auf beidseitig im Gestell angeordneten Seitenführungen auf. Der Zwischenspeicher 1 hat in dem oben liegenden horizontalen Staubereich 5a die befüllten Produkteträger und in dem unten liegenden Staubereich 5b die leeren Produkteträger. Die Stapel mit befülltem Produkteträger werden somit im oberen Bereich des Zwischenspeichers vom Einlauf in Richtung Auslauf transferiert und die Stapel mit entleerten Produkteträgern werden im unteren Bereich vom Auslauf in Richtung Einlauf transferiert. Die Staubereiche können auch so angeordnet sein, dass sich oben die entleerten und unten die befüllten Produkteträger befinden.

Nachdem im Einlauf des Speichers der Stapel mit den befüllten Produkteträgern 40 vertikal nach oben positioniert worden ist, befindet sich unterhalb der Einlaufebene ein zweiter Stapel mit entleerten Produkteträgern in Wartestellung, um die nächste einlaufende Produktreihe aufnehmen zu können. Hierfür befindet sich ein zweites Kettenpaar im Einlauf, jeweils ebenfalls bestückt mit Mitnehmertaschen zur Aufnahme eines Stapels von 20 Produkteträgern. Somit steht immer ein Kettenpaar mit einem Stapel von 20 leeren Produkteträgern 40 bereit zur Aufnahme der einlaufenden Produktreihen, während das andere Kettenpaar die vollen Produkteträger an den oberen Staubereich 5a übergeben kann und danach einen neuen Stapel an den leeren Produkteträger 40 von dem unteren Staubereich 5b holen kann. Hierfür sind die beidseitig angeordneten umlaufenden Kettenpaare 9a, 9b jeweils mit einem Zug von 20 Mitnehmertaschen bestückt, um im Einlaufbereich 3 des Speichers immer Produktreihen aufnehmen zu können und simultan dazu Stapel von befüllten und entleerten Produkteträgern 40 der beiden Staubereiche zu handhaben.

Im Auslauf des Speichers 4 sind ebenfalls beidseitig die gleichen umlaufenden Kettenpaare 9a, 9b angeordnet, um in umgekehrter Art und Weise die mit Produkten befüllten Produkteträgerstapel aus dem Staubereich zu übernehmen und mittels auslaufseitigen Vertikalförderers 7b auf die Ausschubebene abzusenken. Mittels Ausschiebern 13 können die Produktreihen auf die quer angeordneten Austragebänder 80 ausgeschoben werden und über nachgeschaltete Lückenschliessbänder und Verbindungsbänder den Verpackungslinien 60 zugeführt werden. Der Ausschub kann auch auf zwei oder mehreren Ebenen erfolgen.

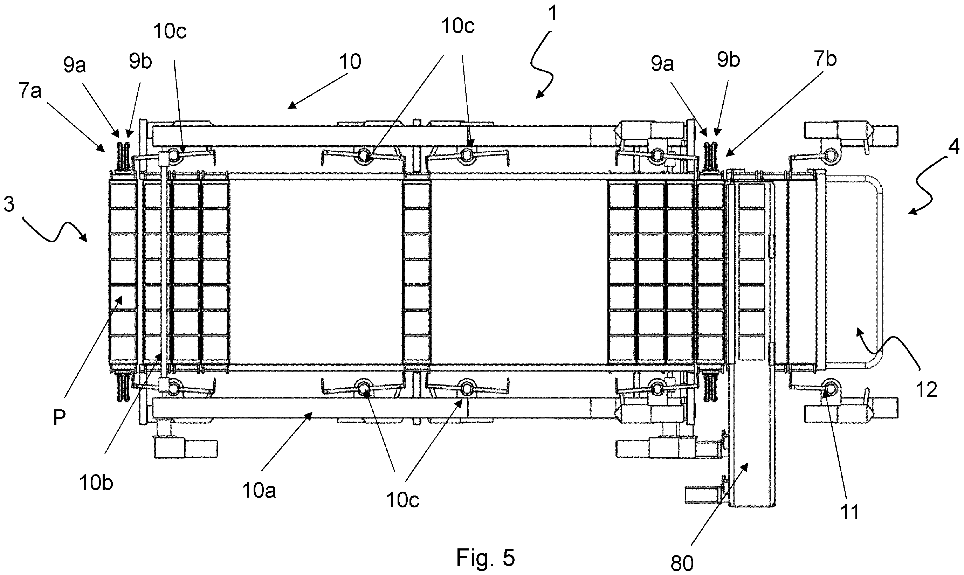

Wie in den Fig. 4 und 5 gezeigt, sind beidseits der Staubereiche Fördereinrichtungen 10 angeordnet, deren Funktion darin besteht, die Stapel der befüllten Produkteträger 40 in Richtung Auslauf zu schieben und die Stapel der entleerten Produkteträger 40 in Richtung Einlauf zu schieben. Die Fördereinrichtungen 10 bestehen jeweils aus zwei mit einer durchgehenden Welle 10b verbundenen Linearführungen 10a, die mit einem Servomotor angetrieben sind. Auf den verschiebbaren Schlitten der Linearführungen 10a ist jeweils ein um seine Vertikalachse schwenkbares Manipulatorgestänge 10c angeordnet, welches seitlich in die Produkteträger 40 eingreifen und damit die Stapel verschieben kann (siehe Fig. 5). Der seitliche Eingriff mit den Manipulatorgestängen 10c erfolgt synchronisiert jedoch mit getrennt angeordneten Antrieben, die sich ortsfest auf dem jeweiligen Schlitten der Linearführungen 10a befinden. In jedem Staubereich befinden sich jeweils mindestens zwei Fördereinrichtungen, um die jeweiligen Produkteträgerstapel zu verschieben. Die Funktion dieser Fördereinrichtungen 10 ist nicht nur beschränkt auf das Verschieben der Produkteträgerstapel in den betreffenden Staubereichen, sondern liegt auch darin, dass die mit Mitnehmertaschen bestückten Förderketten der Vertikalförderer 7a, 7b am Einlauf bzw. Auslauf des Speichers mit Produkteträgerstapeln bestückt bzw. entleert werden. Bei Speichern mit einer grösseren Länge können entsprechend zusätzliche solche Fördereinrichtungen angeordnet werden.

Die Produkteträgerstapel werden im Speichereinlauf mit Produktreihen befüllt und am Auslauf wieder entleert. Wenn der Speicher voll ist, dann befinden sich alle Produkteträger im oberen Staubereich 5a mit den befüllten Stapeln. Ist der Speicher leer, dann befinden sich alle Stapel mit entleerten Produkteträgern im unteren Staubereich 5b. Somit findet im Speicher eine Umwälzung von befüllten und entleerten Produkteträgerstapeln statt. Wenn die dem Auslauf nachgeschalteten Verpackungslinien gestoppt sind, dann wird die Geschwindigkeit des Auslaufs entsprechend reduziert oder gar gestoppt. Als Folge füllt sich der obere Staubereich 5a mit Stapeln befüllter Produkteträger und entsprechend entleert sich der untere Staubereich 5b mit Stapeln entleerter Produkteträger. Wenn nun die nachgeschalteten Verpackungslinien wieder laufen, dann kann der Auslauf des Speichers die Verpackungsmaschinen mit einer typischerweise um 20 % erhöhten Geschwindigkeit mit Produkt bestücken, um den Füllgrad des Speichers in nützlicher Frist zu reduzieren.

Im Auslauf des Speichers unterhalb der Austrageebenen ist eine Bestückungs- und Entnahmestation für entleerte Produkteträger vorgesehen. Hierbei können die Produkteträgerstapel mit der bestehenden Fördereinrichtung 10 aus dem unteren Staubereich 5b herausgeschoben werden, um dann mit einer Auslauffördereinrichtung 11 in einen andockbaren, manuell verfahrbaren Regalwagen 12 geschoben zu werden. Mit einem oder mehreren solcher Regalwagen 12 können dann die entnommenen Produkteträgerstapel manuell zu einem Waschplatz oder zu einer Waschmaschine gefahren werden, damit dann so die Reinigung erfolgen kann. Beispielsweise können so drei entleerte Produkteträgerstapel aus dem Speicher 1 ausgeschleust werden. Ebenso können auch wieder drei entleerte Produkteträgerstapel in den Speicher 1 eingeschleust werden, da die dafür zuständige Auslauffördereinrichtung in beiden Richtungen funktioniert. Dieser Bestückungs -und Entnahmevorgang kann auch automatisiert während der Produktion erfolgen. Damit Personen- und Maschinensicherheit des Speicherauslaufs gewährleistet werden kann, ist direkt unterhalb der Auslaufbänder ein Lichtvorhang angeordnet. Diese Bestückungs- und Entnahmestation ist optional im Speicherauslauf 4 des Speichers 1 anbaubar.

Figur 7 zeigt eine Produktionslinie 2 umfassend einen Zwischenspeicher 50 gemäss einer zweiten Ausführungsform der vorliegenden Erfindung. Da die Produkteträger 51 auch als grossflächige Platten oder Gegenformen ausgebildet sein können, ist es möglich, auch Produktformationen am Einlauf des Speichers 50 auf diese Platten 51 abzulegen. Pralinen, Napolitain-Täfelchen oder Kekse werden oft als Produktformationen produziert und zugeführt. Hierfür können am Einlauf 3 dann entleerte Produkteträger 51 mittels einlaufseitiger Förderschlaufe 53 schlaufenförmig aus dem Speicher ausgefahren werden, um dann mittels Förderbändern 54 mit Produktformationen beladen zu werden, und am Auslauf 4 können dann die beladenen Produkteträger mittels auslaufseitiger Förderschlaufe 55 schlaufenförmig ausgefahren werden, um dann beispielsweise von Pick-and-Place-Robotern 56 auf Austragsbänder 57 entladen zu werden. In einer speziellen Ausführungsform können die Produkteträger auch als flächige Auffangwannen ausgebildet sein, die dann in der eben beschriebenen Art und Weise im Speichereinlauf mit Schüttgut beladen werden können und im Auslauf mittels Robotern wieder entladen werden können. In einer weiteren Ausführungsform können die Austragsbänder 57 parallel zur auslaufseitigen Förderschlaufe 55 angeordnet werden, was ermöglicht, die Stückgüter von den Produkteträgern auf die Austragbänder im Gegenstrommodus zu platzieren.

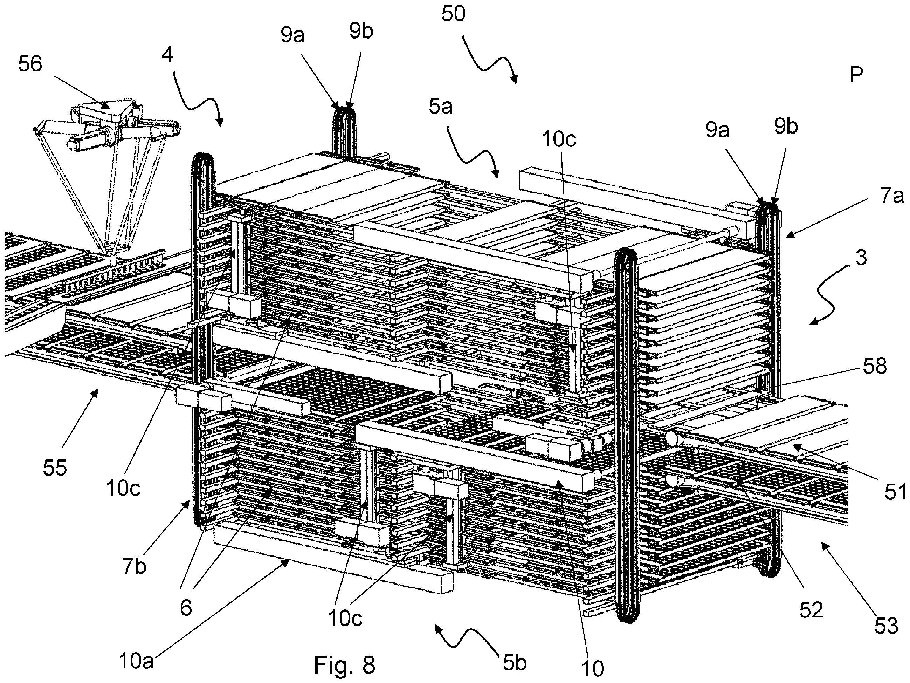

Figur 8 zeigt eine perspektivische Ansicht des Zwischenspeichers 50, wobei gewisse Komponenten, wie zum Beispiel das Gestell, ausgeblendet wurden, damit das Funktionsprinzip besser erläutert werden kann. Wie oben erklärt, werden am Einlauf 3 entleerte Produkteträger 51 mittels einlaufseitiger Förderschlaufe 53 schlaufenförmig aus dem Speicher ausgefahren. Genauer gesagt werden die leeren Produkteträger, die im oberen Staubereich 5a gelagert sind, von den Mitnahmetaschen einer der paarweise angeordneten Förderketten 9a, 9b des Vertikalförderers 7a erfasst und in Richtung des unteren Staubereichs 5b überführt, bis sie ein Auswurfniveau erreichen, wo sie mittels eines Schiebers 58 auf die einlaufseitige Förderschlaufe 53 überführt werden.

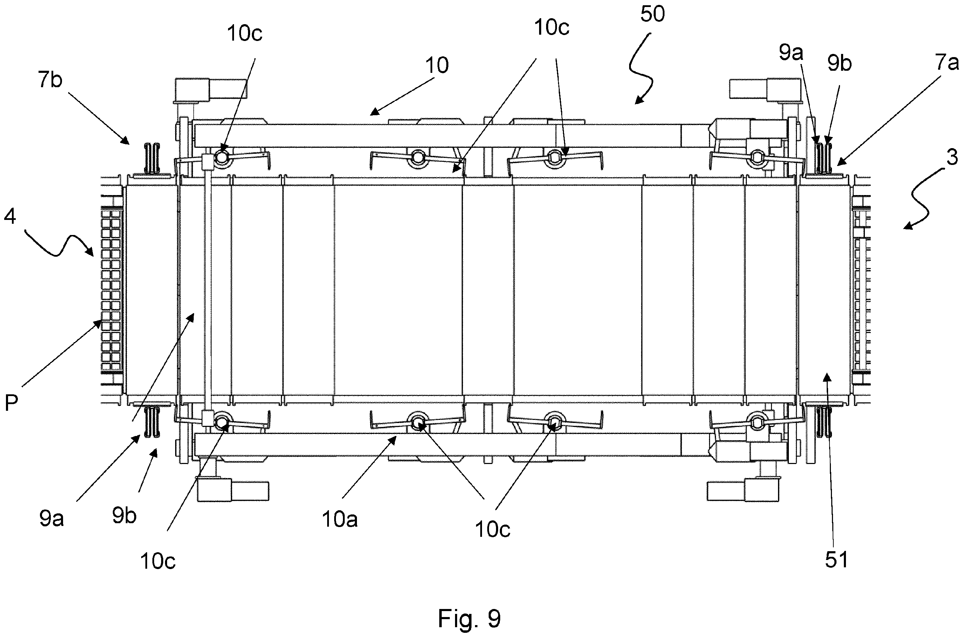

Damit ein Stapel von leeren Produkteträgern vom Vertikalförderer erfasst wird, sind, wie in Figur 9 ersichtlich, auch in dieser Ausführungsform Fördereinrichtungen 10 mit den Manipulatorgestängen 10c vorgesehen, welche seitlich in die Produkteträger 51 eingreifen und damit die Stapel verschieben können (siehe Fig. 9). Der seitliche Eingriff mit den Manipulatorgestängen 10c erfolgt synchronisiert jedoch mit getrennt angeordneten Antrieben, die sich ortsfest auf dem jeweiligen Schlitten der Linearführungen 10a befinden. In jedem Staubereich befinden sich jeweils mindestens zwei Fördereinrichtungen, um die jeweiligen Produkteträgerstapel zu verschieben. Die Funktion der Fördereinrichtungen 10 ist nicht nur beschränkt auf das Verschieben der Produkteträgerstapel in den betreffenden Staubereichen, sondern liegt auch darin, dass die mit Mitnehmertaschen bestückten Förderketten der Vertikalförderer 7a, 7b am Einlauf bzw. Auslauf des Speichers mit Produkteträgerstapeln bestückt bzw. entleert werden. Bei Speichern mit einer grösseren Länge können entsprechend zusätzliche solche Fördereinrichtungen angeordnet werden.

Die vollen Produkteträger 52 werden von den Mitnahmetaschen der Förderketten 9a, 9b des Vertikalförderers 7a erfasst, um einen Stapel von vollen Produkteträgern zu bilden, bevor der Stapel über die Seitenführungen 6 mittels der Fördereinrichtungen 10 zum Auslauf transportiert wird. Ebenso werden am Ausgang die vollen Produkteträger von den Mitnahmetaschen der Förderkette 9a, 9b des auslaufseitigen Vertikalförderers 7b erfasst, um zur auslaufseitigen Förderschlaufe 55 transferiert zu werden. Die leeren Produkteträger werden dann mit Hilfe des Vertikalförderers 7b stapelweise in den oberen Staubereich 5a überführt und von den Fördereinrichtungen 10 über die Seitenführungen 6 in Richtung des Einlaufs 3 befördert.

Da die Stückgüter im Speicher in den Staubereichen 5a und 5b vom Speichereinlauf zum Speicherauslauf räumlich gesehen einen Kanal durchlaufen, eignet sich dieser Speicher auch als Kühler. Diese Kühlfunktion kann realisiert werden, indem dieser kanalförmige Produktbereich mit einer thermisch isolierenden Verschalung eingehaust wird und beispielsweise mit kalter Luft durchströmt wird. Die erforderliche Kühlzeit ist produktspezifisch einstellbar, da diese einfach durch die Mindestdurchlaufzeit der Produkte im Staubereich definierbar ist. Somit verweilen die Produkte eine definierte Zeit zum Kühlen oder Tempern im Staubereich, bevor sie im Speicherauslauf zur nachgelagerten Weiterverarbeitung gefördert werden.

Die Produkteträger können vorteilhafterweise mit einem Code (z. B. RFID-Chip) ausgestattet werden und somit über Lesestationen im Speicher für die Steuerung identifizierbar sein. Die Steuerschränke sind integrativ an den oberen Stirnseiten des Zwischenspeichers lokalisiert, sodass alle servogesteuerten Antriebe und auch die Sensoren des Speichers auf kurzem Weg elektrisch installiert werden können. Ebenso können die Schaltschränke und ein Grossteil der Elektroinstallation des Speichers bei dessen Demontage für Verpackung und Transport in einem zusammengebauten Zustand verbleiben, da der Zwischenspeicher gemäss vorliegender Erfindung eine äusserst kompakte Bauform besitzt, d. h., er hat eine kurze Einbaulänge und eine kleine Bauhöhe. Im Vergleich zu einem einschlägig bekannten Gondelspeicher ist dieser neue Zwischenspeicher bei vergleichbarer Speicherkapazität und ähnlicher Baulänge nur halb so hoch. Somit benötigt dieser neue Speicher nur die Hälfte des Einbauraums. Die Höhe dieses Speichers hängt von der Stapelhöhe ab, d. h. von der Anzahl der Produkteträger pro Stapel und deren vertikalem Abstand zueinander. Wenn nun die Stapelhöhe entsprechend so gewählt wird, dass sich eine stark reduzierte Bauhöhe von kleiner gleich 2,5 m ergibt, so kann dieser Speicher zumeist in einem zusammengebauten Zustand verpackt und zu den Kunden transportiert werden. Dadurch ist die Montagezeit beim Kunden drastisch reduziert und der Kunde kann durch einen kleineren Unterbruch in der Produktion entsprechend schneller wieder produzieren. Ausserdem sind auch die Montage- und Inbetriebnahmekosten entsprechend reduziert und ein solcher Speicher kann dann auch günstiger angeboten werden. Da das Produkt im Staubereich des Speichers stationär auf den Produkteträgern liegt und vom Einlauf zum Auslauf durch die Transfereinheiten nur mit einer kleinen Geschwindigkeit durchgeschoben wird, wird das Produkt kaum belastet. Beispielsweise kann bei den Gondelspeichern durch das Pendeln der Gondeln das Produkt von den Gondeltablaren herunterrutschen.

## Patentansprüche

1. Zwischenspeicher (1,50) zum Zwischenspeichern von Stückgütern, wie z. B. Schokolade, Bonbons, Keksen oder Pizza, auf Produkteträgern (20,30,40) in einer Produktionslinie (2), umfassend :
- einen an zumindest einem Zufuhrband anschliessbaren Einlaufbereich (3),
- einen an zumindest einem Austrageband anschliessbaren Auslaufbereich (4),
- zwei übereinanderliegende Staubereiche (5a, 5b), wobei die Staubereiche (5a, 5b) horizontale Seitenführungen (6) umfassen, die sich jeweils vom Einlaufbereich bis zum Auslaufbereich erstrecken, wobei die Seitenführungen derart konfiguriert sind, dass die Produkteträger (20,30,40) vom Einlaufbereich zum Auslaufbereich und umgekehrt überführbar sind, während sie im Wesentlichen horizontal bleiben,
- einen einlaufseitigen Vertikalförderer (7a) und einen auslaufseitigen Vertikalförderer (7b) zum Überführen der Produkteträger vom ersten Staubereich (5a) in Richtung des zweiten Staubereichs (5b) und vom zweiten Staubereich (5a) in Richtung des ersten Staubereichs (5b), während die Produkteträger im Wesentlichen horizontal bleiben,
- für jeden Staubereich (5a, 5b) mindestens eine Fördereinrichtung (10) für das Ankoppeln und Abkoppeln der Produkteträger an die Vertikalförderer (7a, 7b) und für das Überführen der Produkteträger über die Seitenführungen vom Einlaufbereich zum Auslaufbereich oder umgekehrt,
- wobei der Zwischenspeicher derart konfiguriert ist, dass die Produkteträger vom Einlaufbereich zum Auslaufbereich und umgekehrt mittels der Fördereinrichtungen stapelweise überführbar sind.

2. Zwischenspeicher (1,50) nach Anspruch 1, wobei die Vertikalförderer (7a, 7b) jeweils zwei paarweise angeordnete und getrennt antreibbare Förderketten (9a, 9b) aufweisen.

3. Zwischenspeicher (1.50) nach Anspruch 2, wobei die Förderketten (9a, 9b) Mitnehmertaschen für das Ankoppeln der Produkteträger aufweisen.

4. Zwischenspeicher (1,50) nach einem der vorherigen Ansprüche, wobei für jeden Staubereich mindestens zwei Fördereinrichtungen (10) vorgesehen sind.

5. Zwischenspeicher (1) nach einem der vorherigen Ansprüche umfassend im Auslaufbereich eine Auslauffördereinrichtung (11) für das stapelweise Überführen von Produkteträgern auf eine an dem Auslaufbereich angekoppelte Transporteinrichtung (12).

6. Zwischenspeicher (1) nach einem der vorherigen Ansprüche, wobei der Zwischenspeicher derart konfiguriert ist, dass die Produkteträger von einem Staubereich zum anderen Staubereich mittels Vertikalförderer stapelweise überführbar sind.

7. Zwischenspeicher (1) nach einem der vorherigen Ansprüche derart konfiguriert, dass leere Produkteträger stapelweise vom unteren Staubereich (5b) zum oberen Staubereich (5a) durch den einlaufseitigen Vertikalförderer (7a) überführbar sind, während Stückgüter vom Zufuhrband auf die Produkteträger überführt werden.

8. Zwischenspeicher (1) nach Anspruch 7 derart konfiguriert, dass volle Produkteträger stapelweise vom oberen Staubereich (5a) zum unteren Staubereich (5b) durch den auslaufseitigen Vertikalförderer (7b) überführbar sind, während Stückgüter von dem Produkteträger auf mindestens ein Austrageband überführt werden.

9. Zwischenspeicher (1) nach einem der Ansprüche 1 bis 6 derart konfiguriert, dass volle Produkteträger stapelweise vom unteren Staubereich (5b) zum oberen Staubereich (5a) durch den auslaufseitigen Vertikalförderer (7b) überführbar sind, während Stückgüter von dem Produkteträger auf mindestens ein Austrageband überführt werden.

10. Zwischenspeicher (1) nach Anspruch 9 derart konfiguriert, dass leere Produkteträger stapelweise vom oberen Staubereich (5a) zum unteren Staubereich (5b) durch den einlaufseitigen Vertikalförderer (7b) überführbar sind, während Stückgüter von dem Zufuhrband auf die Produkteträger überführt werden.

11. Zwischenspeicher (50) nach einem der Ansprüche 1 bis 4 umfassend einlaufseitig eine erste Förderschlaufe (53) zum Herausführen von leeren Produkteträgern aus einem Staubereich (5a, 5b) und zum Zurückführen von vollen Produkteträgern in den anderen Staubereich (5a, 5b).

12. Zwischenspeicher (50) nach Anspruch 11 umfassend auslaufseitig eine zweite Förderschlaufe (55) zum Herausführen von vollen Produkteträgern aus einem Staubereich (5a, 5b) und zum Zurückführen von leeren Produkteträgern in den anderen Staubereich (5a, 5b).

13. Zwischenspeicher (50) nach einem der Ansprüche 11 oder 12 umfassend auslaufseitig Mittel zur Überführung der Stückgüter von den vollen Produkteträgern auf der zweiten Förderschlaufe auf mindestens ein Austrageband.

14. Zwischenspeicher (1,50) nach einem der vorherigen Ansprüche, wobei mindestens einer der Staubereiche von einem zumindest teilweise geschlossenen Gehäuse in Form eines Tunnels gebildet ist.

15. Zwischenspeicher (1,50) nach Anspruch 14, wobei das Gehäuse Kühlmittel für das Kühlen der Stückgüter und/oder der Produkteträger umfasst.
